# FASCICULE DE BREVET EUROPEEN

(11) **EP 3 191 365 B1**
(45) Date de publication et mention de la délivrance du brevet: **31.10.2018**
(21) Numéro de dépôt: 15762565.8
(22) Date de dépôt: 09.09.2015
(51) Int. Cl.: B64C 13/10, B64C 13/46, B64C 27/56, F16D 21/02, F16D 27/108, F16D 27/112, F16D 27/12

(54) **DISPOSITIF DE MANCHE DE COMMANDE DE VOL D'AERONEF A RETOUR D'EFFORT AVEC VOIE DE SECOURS**
STEUERORGAN MIT KRAFTRÜCKMELDUNG FÜR EINE FLUGZEUGSTEUERUNGSVORRICHTUNG MIT EINEM NOTFALLSTRANG
AIRCRAFT FLIGHT CONTROL INCEPTOR WITH FORCE-FEEDBACK HAVING AN EMERGENCY PATH

(30) Priorité: 09.09.2014 FR 1458458
(43) Date de publication de la demande: 19.07.2017
(73) Titulaire: Safran Electronics & Defense, 92100 Boulogne-Billancourt (FR)
(72) Inventeur: CREMIERE, Benoît, 92100 Boulogne-Billancourt (FR)
(74) Mandataire: Regimbeau
(86) Numéro de dépôt international: PCT/EP2015/070561
(87) Numéro de publication internationale: WO 2016/038069

(56) Documents cités:
- FR-A1- 2 970 697
- GB-A- 2 022 034
- US-A1- 2007 119 678

## Description

### DOMAINE DE L'INVENTION

L'invention concerne un dispositif de manche de commande de vol d'aéronef. Le dispositif est par exemple un dispositif de manche collectif d'hélicoptère.

### ETAT DE LA TECHNIQUE

Les hélicoptères sont généralement équipés de trois commandes de vol actionnables par le pilote : un manche de pilotage collectif, un manche de pilotage cyclique et les pédales anti-couple. Le manche de pilotage collectif permet de modifier collectivement l'angle d'incidence des pâles du rotor principal pour faire monter ou descendre, accélérer ou ralentir l'hélicoptère. Le manche de pilotage cyclique permet de modifier cycliquement l'angle d'incidence des pâles du rotor principal en cours de rotation, de manière à créer une poussée différente en différents points du cycle, pour incliner l'hélicoptère vers l'avant ou vers l'arrière (assiette en tangage), ou d'un côté ou de l'autre (inclinaison en roulis). Les pédales anti-couple permettent de modifier le pas des pales du rotor auxiliaire servant à contrer le couple induit par le rotor principal de manière à faire tourner l'hélicoptère (dérapage en lacet) en vol stationnaire.

Traditionnellement, dans les hélicoptères à commandes de vol hydrauliques, le manche de pilotage collectif est relié à des tiroirs hydrauliques par le biais d'une transmission mécanique (appelée « trim ») située sous le plancher du cockpit. Les tiroirs hydrauliques commandent des actionneurs de puissance qui contrôlent l'orientation des pâles du rotor principal.

En revanche, dans les hélicoptères à commandes de vol électriques, le manche de pilotage collectif n'est pas relié mécaniquement aux actionneurs de puissance. Pour ce type de commandes, il existe des systèmes permettant de générer un retour d'effort sur le manche de pilotage afin que le pilote puisse ressentir une force de résistance sur le manche.

Actuellement, les systèmes permettant de générer un retour d'effort sont essentiellement des systèmes mécaniques passifs, qui ne permettent pas une reconfiguration dynamique du comportement du manche en fonction du domaine de vol. Autrement dit, la loi d'effort ressentie par le pilote est toujours la même quelque soient les conditions de vol.

Il serait souhaitable de concevoir des systèmes de retour d'effort actifs, permettant de modifier la loi d'effort ressentie par le pilote en fonction des conditions de vol. En particulier, il serait souhaitable, dans des situations de vol complexes, d'appliquer une loi de retour d'effort donnant au pilote des sensations tactiles des limites du domaine de vol, par exemple, en empêchant le pilote de déplacer le manche dans des positions extrêmes qui pourraient se révéler dangereuses.

Cependant, de tels systèmes de retour d'effort actifs ne sont actuellement pas mis en oeuvre dans les hélicoptères, notamment à cause du fait que ces systèmes incluent nécessairement une motorisation, entrainant des risques de panne. Or, une panne de motorisation aurait pour conséquence un blocage du manche, ce qui constituerait potentiellement un évènement catastrophique.

Le document GB 2 022 034 décrit un dispositif de commande de vol comprenant un arbre d'entrée relié à un manche de pilotage, un arbre de sortie relié à une gouverne de vol et un embrayage permettant de raccorder sélectivement l'arbre de sortie directement à l'arbre d'entrée ou l'arbre de sortie ou à un servomoteur. Le dispositif comprend par ailleurs un système permettant de générer sur le manche de pilotage un retour d'effort, incluant un ressort de torsion et un amortisseur.

Le document FR 2 970 697 décrit un dispositif d'actionnement comprenant une chaine de transmission reliant un manche de pilotage à un moteur électrique lui-même relié à un dispositif de pilotage automatique. La chaine de transmission inclut un réducteur et un embrayage qui désactive le dispositif de pilotage automatique lorsque le couple transmis à travers la chaine de transmission atteint un seuil prédéterminé.

Le document US 2007/0119678 décrit un embrayage multi-positions permettant de coupler sélectivement deux parmi trois arbres rotatifs.

### RESUME DE L'INVENTION

Un but de l'invention est de proposer un dispositif de manche de commande de vol d'aéronef, incluant un système de retour d'effort, n'entrainant pas un blocage du manche en cas de panne du système.

Ce problème est résolu dans le cadre de la présente invention grâce à un dispositif de manche de commande de vol d'aéronef, comprenant :
- un carter destiné à être fixé sur une structure de l'aéronef,
- un arbre de sortie destiné à être relié à un manche de commande de vol, l'arbre de sortie étant monté mobile en rotation par rapport au carter,
- une voie primaire comprenant un premier organe de génération de couple propre à exercer un premier couple sur l'arbre de sortie,
- une voie secondaire comprenant un deuxième organe de génération de couple propre à exercer un deuxième couple sur l'arbre de sortie, et
- un embrayage propre à raccorder sélectivement la voie primaire et la voie secondaire à l'arbre de sortie.

Ainsi, en cas de panne ou de grippage d'un composant de la voie primaire, l'embrayage permet de raccorder la voie secondaire à l'arbre de sortie. De cette manière, la voie secondaire prend le relai sur la voie primaire.

La voie secondaire permet de maintenir le manche en fonctionnement, malgré une éventuelle panne du premier organe de génération de couple sur la voie primaire.

Le dispositif peut en outre présenter les caractéristiques suivantes :
- l'embrayage comprend une pièce d'embrayage mobile par rapport au carter entre une première position dans laquelle la pièce d'embrayage est en prise avec la voie primaire et une deuxième position dans laquelle la pièce d'embrayage est en prise avec la voie secondaire,
- l'embrayage comprend un électroaimant qui, lorsqu'il est alimenté, sollicite la pièce d'embrayage vers la première position,
- l'embrayage comprend un organe élastique de rappel propre à solliciter la pièce d'embrayage vers la deuxième position,
- la pièce d'embrayage est mobile en translation par rapport au carter,
- l'arbre de sortie est mobile en rotation par rapport au carter selon un axe de rotation, et la pièce d'embrayage est mobile en translation par rapport au carter parallèlement à l'axe de rotation de l'arbre de sortie,
- la pièce d'embrayage est montée solidaire en rotation de l'arbre de sortie tout en étant mobile en translation par rapport à l'arbre de sortie,
- le dispositif comprend une membrane flexible par l'intermédiaire de laquelle l'arbre de sortie est raccordé à la pièce d'embrayage,
- le premier organe de génération de couple comprend au moins un moteur électrique,
- la voie primaire comprend un réducteur par l'intermédiaire duquel le moteur électrique exerce le premier couple sur l'arbre de sortie,
- le deuxième organe de génération de couple est un système à frottement,
- le système à frottement comprend un tambour et un câble en contact avec le tambour, le deuxième couple étant généré par frottement entre le câble et le tambour lorsque le tambour est entrainé en rotation par rapport au câble,
- le câble est fixé au carter et le tambour est monté rotatif par rapport au carter,
- le deuxième organe de génération de couple comprend un élément élastique reliant le câble au carter,
- le dispositif comprend au moins un capteur de position propre à mesurer une position angulaire de l'arbre de sortie et une unité de commande électronique propre à commander le premier organe de génération de couple en fonction de la position angulaire mesurée,
- le manche de commande de vol est un manche collectif d'hélicoptère.

### PRESENTATION DES DESSINS

D'autres caractéristiques et avantages ressortiront encore de la description qui suit, laquelle est purement illustrative et non limitative et doit être lue en regard des dessins annexés, parmi lesquels :
- la figure 1 représente de manière schématique, en perspective, un dispositif de manche de commande de vol conforme à un mode de réalisation de l'invention,
- la figure 2 représente de manière schématique, en perspective des composants de la voie primaire du dispositif,
- la figure 3 représente de manière schématique, en perspective, des composants de la voie secondaire du dispositif,
- la figure 4 représente, de manière schématique en coupe, l'embrayage du dispositif,
- les figures 5A et 5B représentent de manière schématique en perspectives des composants de l'embrayage,
- la figure 6 illustre un chemin d'effort à travers l'embrayage lorsque la voie primaire est activée,
- la figure 7 illustre un chemin d'effort à travers l'embrayage lorsque la voie secondaire est activée,
- la figure 8 est un diagramme représentant de manière schématique différents éléments de commande du dispositif.

### DESCRIPTION DETAILLEE D'UN MODE DE REALISATION

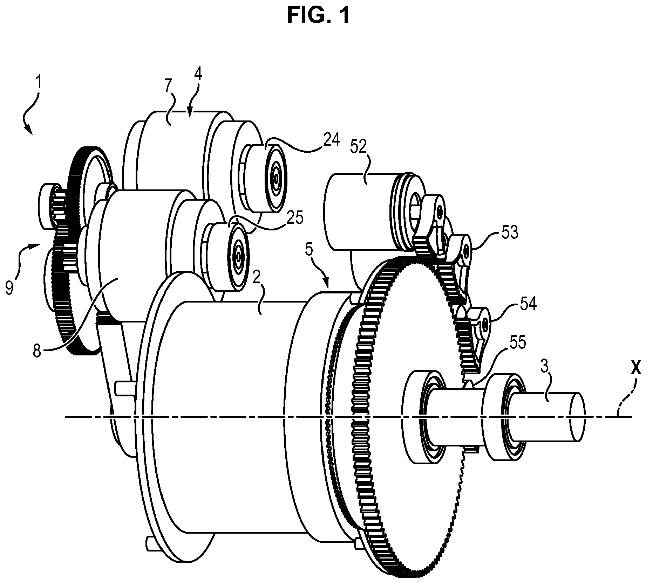

En référence à la figure 1, le dispositif 1 représenté est un dispositif de commande d'un manche de pilotage, tel qu'un manche collectif d'hélicoptère par exemple.

Le dispositif 1 comprend un carter 2 et un arbre de sortie 3 monté rotatif par rapport au carter 2 autour d'un axe de rotation X. Le carter 2 est destiné à être fixé à une structure de l'hélicoptère, tel que le plancher du cockpit par exemple. L'arbre de sortie 3 est propre à être relié au manche collectif de l'hélicoptère. Le manche collectif est destiné à être actionné par un pilote pour commander le pas collectif des pâles du rotor principal de l'hélicoptère.

Le manche collectif est monté solidaire en rotation de l'arbre de sortie 3, de sorte qu'une rotation du manche provoque une rotation identique de l'arbre de sortie 3 autour de l'axe X.

Le dispositif 1 comprend un système de retour d'effort permettant d'appliquer au manche une force résistante en fonction du déplacement imprimé au manche par le pilote.

Le système de retour d'effort comprend une voie primaire 4 (ou voie principale), une voie secondaire 5 (ou voie de secours) et un embrayage 6 propre à raccorder sélectivement la voie primaire 4 et la voie secondaire 5 à l'arbre de sortie 3.

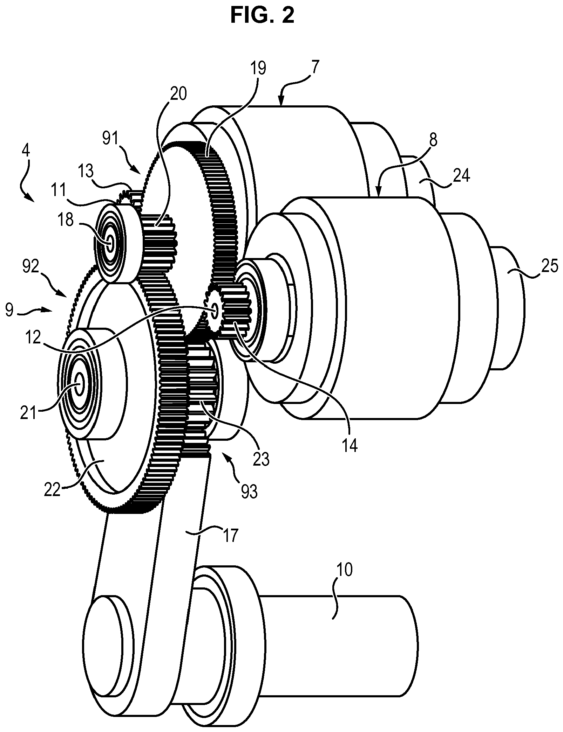

La voie primaire 4 est représentée plus en détails sur la figure 2. La voie primaire 4 comprend un premier moteur électrique 7, un deuxième moteur électrique 8 monté en parallèle du premier moteur électrique 7, un réducteur 9 et un arbre de sortie 10.

Le premier moteur électrique 7 comprend un stator monté fixe par rapport au carter 2, un rotor mobile en rotation par rapport au stator et un arbre de sortie 11 monté solidaire du rotor.

De même, le deuxième moteur électrique 8 comprend un stator monté fixe par rapport au carter, un rotor mobile en rotation par rapport au stator et un arbre de sortie 12 monté solidaire du rotor.

Le réducteur 9 est un réducteur à trois étages de réduction. Le réducteur 9 comprend un premier étage 91, un deuxième étage 92 et un troisième étage 93.

Le premier étage 91 du réducteur comprend un premier pignon d'entrée 13, un deuxième pignon d'entrée 14, un premier arbre intermédiaire 18 monté rotatif par rapport au carter 2 et un premier pignon intermédiaire 19.

Le premier pignon d'entrée 13 est monté solidaire en rotation de l'arbre de sortie du premier moteur 7. Le deuxième pignon d'entrée 14 est monté solidaire en rotation de l'arbre de sortie du deuxième moteur 8. Le premier pignon intermédiaire 19 est monté solidaire en rotation du premier arbre intermédiaire 18.

Le deuxième étage 92 du réducteur comprend un deuxième pignon intermédiaire 20, un deuxième arbre intermédiaire 21 monté rotatif par rapport au carter 2 et un troisième pignon intermédiaire 22.

Le deuxième pignon intermédiaire 20 est monté solidaire en rotation du premier arbre intermédiaire 18. Le troisième pignon intermédiaire 22 est monté solidaire en rotation du deuxième arbre intermédiaire 21.

Le troisième étage 93 du réducteur comprend un quatrième pignon intermédiaire 23 et un pignon de sortie 17.

Le quatrième pignon intermédiaire 23 est monté solidaire en rotation du deuxième arbre intermédiaire 21. Le pignon de sortie 17 est monté solidaire de l'arbre de sortie 10.

Les étages 91 à 93 sont agencés de sorte que premier et le deuxième pignons d'entrée 13 et 14 engrènent tous les deux avec le premier pignon intermédiaire 19, le deuxième pignon intermédiaire 20 engrène avec le troisième pignon intermédiaire 22 et le quatrième pignon intermédiaire 23 engrène avec le pignon de sortie 17.

De cette manière, les deux moteurs électriques 7 et 8 entrainent simultanément en rotation le premier pignon intermédiaire 19 par le biais des deux pignons d'entrée 13 et 14. La rotation du premier pignon intermédiaire 19 est transmise au pignon de sortie 17 par l'intermédiaire des trois étages 91 à 93 de réduction. Le pignon de sortie 17 entraine en rotation l'arbre de sortie 10 de la voie primaire.

Les deux pignons d'entrée 13 et 14 sont identiques entre eux. Le premier pignon intermédiaire 19 présente un diamètre supérieur au diamètre des pignons d'entrée 13 et 14. De même, le troisième pignon intermédiaire 22 présente un diamètre supérieur au diamètre du deuxième pignon intermédiaire 20. Enfin, le pignon de sortie 17 présente un diamètre supérieur au diamètre du quatrième pignon intermédiaire 23. De cette manière, la vitesse de rotation de l'arbre de sortie 10 est fortement réduite par rapport à la vitesse de rotation des arbres de sortie des moteurs 7 et 8. Le rapport de réduction est par exemple d'environ 120.

La voie primaire 4 comprend par ailleurs un premier capteur de position 24 et un deuxième capteur de position 25.

Le premier capteur de position 24 est propre à mesurer une position angulaire du rotor du premier moteur électrique 7. Le premier capteur de position 24 est par exemple un codeur incrémental comprenant un disque rotatif monté solidaire en rotation du rotor du premier moteur électrique 7. Le premier capteur de position 24 est propre à générer un premier signal de position représentatif de la position angulaire du rotor par rapport au stator. Ce premier signal est transmis à l'unité de commande électronique.

De même, le deuxième capteur de position 25 est propre à mesurer une position angulaire du rotor du deuxième moteur électrique 8. Le deuxième capteur de position 25 est par exemple un codeur incrémental comprenant un disque rotatif monté solidaire en rotation du rotor du premier moteur électrique 8. Le deuxième capteur de position 25 est propre à générer un deuxième signal de position représentatif de la position angulaire du rotor par rapport au stator. Ce deuxième signal est transmis à l'unité de commande électronique.

En cas de panne ou de défaillance de l'un des deux moteurs électriques 7 et 8, l'autre moteur est propre à entrainer seul en rotation le premier pignon intermédiaire 19 sans l'aide du moteur défaillant.

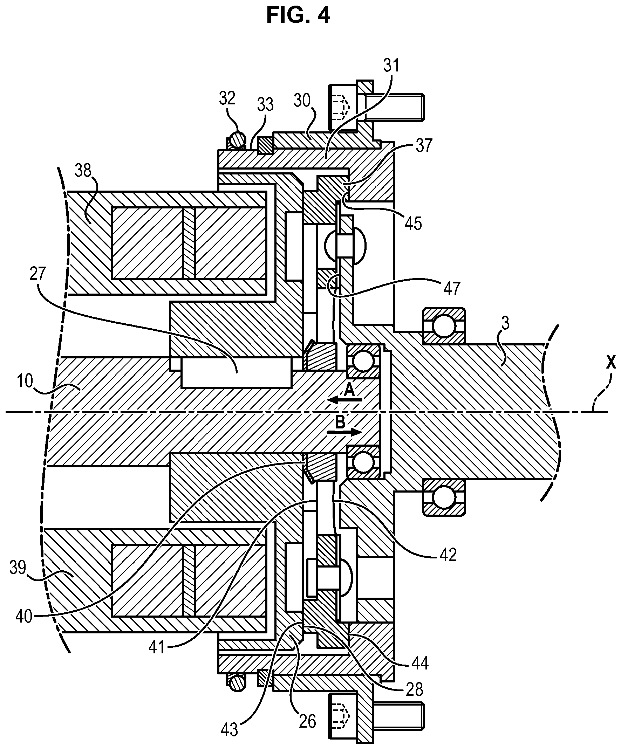

La voie primaire 4 comprend également un disque 26 (visible sur la figure 4), le disque 26 étant monté solidaire en rotation de l'arbre de sortie 10 par l'intermédiaire d'une clavette 27. Le disque 26 présente une couronne périphérique dentée 28.

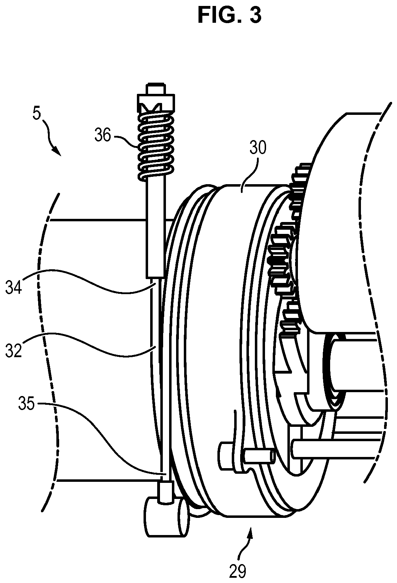

La voie secondaire 5 est représentée plus en détails sur les figures 3 et 4. La voie secondaire 5 comprend un système de génération de frottement 29.

Le système de génération de frottement 29 comprend une bague 30 montée fixe sur le carter 2, un tambour 31 monté rotatif par rapport au carter 2 autour de l'axe X, et un câble 32 en contact avec le tambour 31.

La bague 30 entoure le tambour 31 de manière à guider le tambour 31 en rotation.

Le tambour 31 présente une surface externe cylindrique de révolution 33 formant une surface de frottement.

Le câble 32 entoure le tambour 31. Plus précisément, le câble 32 est enroulé sur la surface de frottement 33 du tambour 31. Le câble 32 présente une première extrémité 34 fixée au carter 2 et une deuxième extrémité 35 également fixée au carter 2.

Le système de génération de frottement 29 comprend un élément élastique 36 par l'intermédiaire duquel la première extrémité 34 du câble 32 est fixée au carter 2. L'élément élastique 36 est par exemple un ressort de traction propre à maintenir le câble 32 en tension autour du tambour 31.

Le câble 32 est enroulé autour du tambour 31 de sorte que lorsque le tambour 31 est entrainé en rotation par rapport au carter 2, la surface de frottement 33 du tambour 31 frotte contre le câble 32, générant de ce fait un couple de frottement venant s'opposer à la rotation du tambour 31.

L'embrayage 6 est représenté sur la figure 4. L'embrayage 6 comprend une pièce d'embrayage 37, deux électroaimants 38, 39 et un organe élastique de rappel 40.

La pièce d'embrayage 37 présente la forme d'un disque. La pièce d'embrayage 37 est mobile en translation par rapport au carter 2 selon une direction parallèle à l'axe X.

Plus précisément, la pièce d'embrayage 37 est mobile entre une première position dans laquelle la pièce d'embrayage est en prise avec le disque 26 de la voie primaire 4, et une deuxième position dans laquelle la pièce d'embrayage est en prise avec le tambour 31 de la voie secondaire 5.

A cet effet, la pièce d'embrayage 37 présente une première face 41 et une deuxième face 42, opposée à la première face 41. La première face 41 de la pièce d'embrayage 37 présente des dents 43 propres à venir en prise avec les dents 28 du disque 26 de la voie primaire 4. La deuxième face 42 de la pièce d'embrayage 37 présente une surface de friction 44 propre à venir en prise avec une surface de friction 45 du tambour 31 de la voie secondaire 5.

Les électroaimants 38 et 39 sont agencés de sorte que lorsqu'ils sont activés, ils génèrent un champ magnétique sollicitant la pièce d'embrayage 37 vers la première position.

L'organe élastique de rappel 40 sollicite quant à lui la pièce d'embrayage 37 vers la deuxième position. L'organe élastique de rappel 40 est par exemple un ressort agencé entre la pièce d'embrayage 37 et le disque 26 de la voie primaire 4.

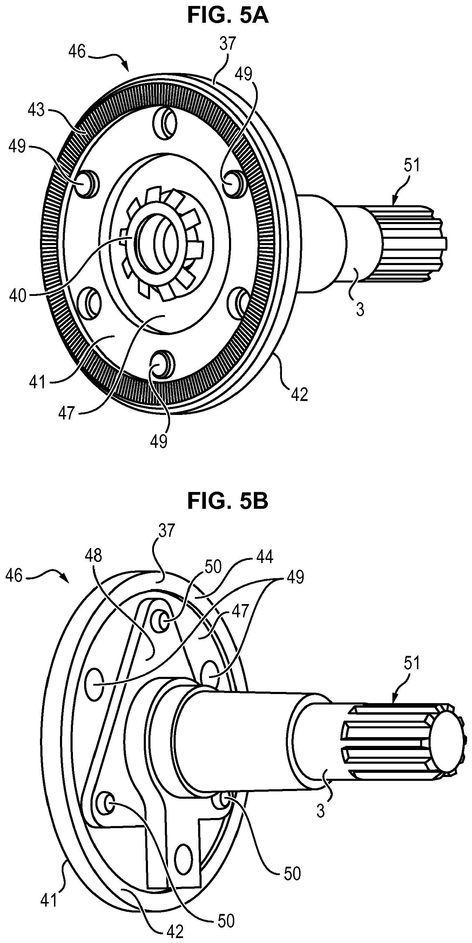

Par ailleurs, le dispositif 1 comprend un système de liaison 46 liant l'arbre de sortie 3 du dispositif à la pièce d'embrayage 37. Le système de liaison 46 est illustré plus en détails sur les figures 5A et 5B. Le système de liaison 46 permet de solidariser en rotation la pièce d'embrayage 37 et l'arbre de sortie 3 tout en autorisant une translation de la pièce d'embrayage 37 par rapport à l'arbre de sortie 3.

Le système de liaison 46 comprend une membrane flexible 47 agencée entre la pièce d'embrayage 37 et l'arbre de sortie 3, une pièce de raccordement 48 solidaire de l'arbre de sortie 3 et une pluralité d'éléments de fixation 49 et 50.

Les éléments de fixation incluent des premiers éléments de fixation 49 pour fixer la membrane flexible 47 à la pièce d'embrayage 37 et des deuxièmes éléments de fixation 50 pour fixer la pièce de raccordement 48 à la membrane flexible 47.

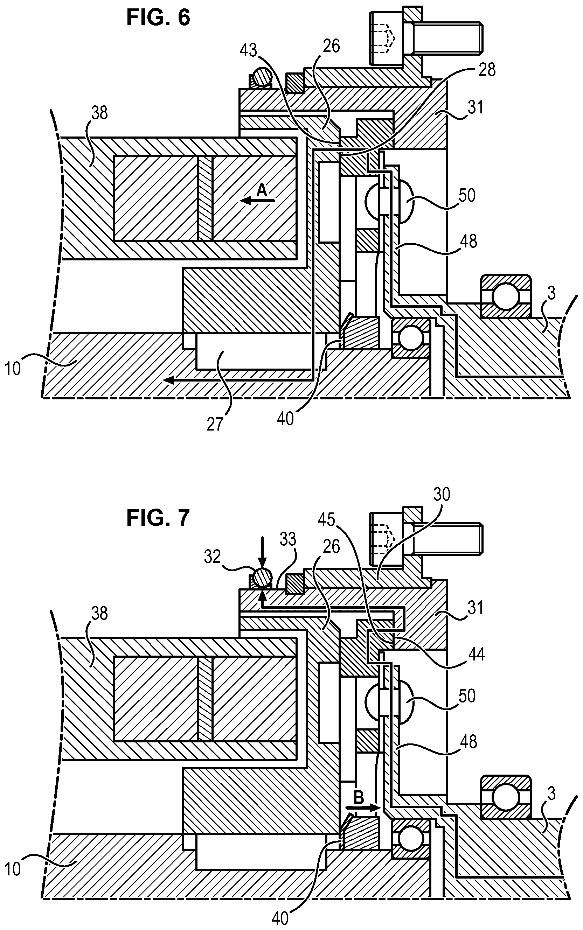

Dans l'exemple illustré sur les figures 6A et 6B, la membrane flexible 47 présente une forme de disque et les éléments de fixation 49, 50 sont agencés à la périphérie du disque. Les premiers éléments de fixation 49 sont intercalés entre les deuxièmes éléments de fixation 50.

De plus, la pièce de raccordement 48 présente une forme sensiblement triangulaire. Les deuxièmes éléments de fixation 50 sont positionnés dans les angles du triangle.

Du fait de sa flexibilité, la membrane 47 autorise une translation de la pièce d'embrayage 37 par rapport à l'arbre de sortie 3 parallèlement à l'axe X.

L'arbre de sortie 3 présente des cannelures longitudinales 51, s'étendant parallèlement à l'axe X. Les cannelures longitudinales 51 sont propres à coopérer avec des cannelures complémentaires du manche de pilotage pour lier en rotation l'arbre de sortie 3 et le manche de pilotage.

Le dispositif 1 comprend également quatre capteurs de position 52 à 55 visibles sur la figure 1, propres à mesurer une position angulaire de l'arbre de sortie 3.

Chaque capteur de position 52 à 55 est propre à générer un signal de mesure représentatif de la position angulaire du manche. Les signaux générés par les capteurs 52 à 55 sont transmis à l'unité de commande électronique.

En fonctionnement normal, la pièce d'embrayage 37 est initialement dans la deuxième position.

Lors de la mise en marche du dispositif 1, les électroaimants 38 et 39 sont alimentés de sorte qu'ils sollicitent la pièce d'embrayage 37 vers la première position. Le champ créé par les électroaimants 38 et 39 est suffisant pour vaincre la force de rappel exercée par l'organe de rappel 40 sur la pièce d'embrayage 37.

La pièce d'embrayage 37 est déplacée de la deuxième position à la première position (flèche A).

La pièce d'embrayage 37 est en prise avec le disque 26 de la voie primaire 4 (figure 6). Dans cette configuration, le retour d'effort appliqué sur le manche de pilotage est généré par la voie primaire 4.

L'unité de commande électronique commande les moteurs 7 et 8 en fonction des signaux de mesure qu'elle reçoit en provenance des capteurs de position 52 à 55 et de paramètres de vol.

Chaque moteur 7, 8 génère un couple de réaction qui est transmis au manche par le biais du réducteur 9 et de l'embrayage 6.

En particulier, la pièce d'embrayage 37 transmet le couple de réaction généré par les moteurs 7, 8 à l'arbre de sortie 3 du dispositif 1 via la membrane flexible 47.

En cas de défaillance de l'un des moteurs 7 ou 8, l'autre moteur est adapté pour générer le couple de réaction nécessaire, sans l'aide du moteur défaillant.

Par ailleurs, en cas de défaillance des deux moteurs 7 et 8, de l'unité de commande électronique ou de coupure de l'alimentation électrique, la pièce d'embrayage 37 est ramenée automatiquement de la première position à la deuxième position (figure 7).

Dans cette configuration, les électroaimants 38 et 39 ne sont plus alimentés, de sorte qu'ils ne sollicitent plus la pièce d'embrayage 37 vers la première position.

La pièce d'embrayage 37 est déplacée de la première position à la deuxième position (flèche B) sous l'effet de la force de rappel exercée par l'organe de rappel 40 sur la pièce d'embrayage 37. La pièce d'embrayage 37 est en prise avec le tambour 31 de la voie secondaire.

Le retour d'effort appliqué sur le manche de pilotage est généré par la voie secondaire 5.

Le couple exercé sur le manche par le pilote est transmis au tambour 31 par l'intermédiaire de l'arbre de sortie 3 et de l'embrayage 6. Le déplacement du manche entraine une rotation du tambour 31 par rapport au câble 32. Le déplacement du tambour 31 par rapport au câble 32 crée un frottement entre le tambour 31 et le câble 32, ce qui a pour effet de générer un couple résistant venant s'opposer au couple exercé par le pilote sur le manche.

De cette manière, en cas de panne ou de grippage d'un composant de la voie primaire 4, l'embrayage 6 permet de raccorder la voie secondaire 5 à l'arbre de sortie 3 du dispositif 1. La voie secondaire 5 prend le relai sur la voie primaire 4.

De plus, la voie secondaire 5 ne nécessite pas une alimentation en énergie électrique pour fonctionner.

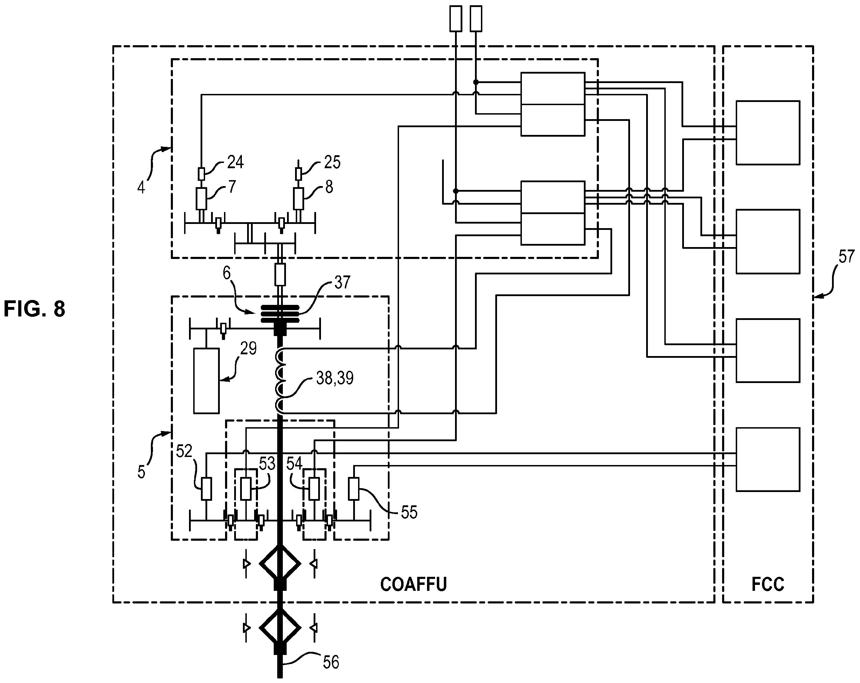

La figure 8 est un diagramme représentant de manière schématique différents éléments de commande du dispositif 1.

Comme illustré sur cette figure, le manche de pilotage 56 est raccordé sélectivement à la voie primaire 4 et à la voie secondaire 5 par le biais de l'embrayage 6.

Les signaux de mesure issus des capteurs 24, 25, 52 à 55 sont transmis à l'unité de commande électronique 57. L'unité de commande électronique commande d'une part les moteurs 7 et 8 et d'autre part les électroaimants 38 et 39, en fonction des signaux de mesure qu'elle reçoit.

## Revendications

1. Dispositif (1) de manche de commande de vol d'aéronef, comprenant :
- un carter (2) destiné à être fixé sur une structure de l'aéronef,
- un arbre de sortie (3) destiné à être relié à un manche (56) de commande de vol, l'arbre de sortie (3) étant monté mobile en rotation par rapport au carter (2),
- une voie primaire (4) comprenant un premier organe de génération de couple (7, 8) propre à exercer un premier couple sur l'arbre de sortie (3),
- une voie secondaire (5) comprenant un deuxième organe de génération de couple (29) propre à exercer un deuxième couple sur l'arbre de sortie (3), et
- un embrayage (6) propre à raccorder sélectivement la voie primaire (4) et la voie secondaire (5) à l'arbre de sortie (3).

2. Dispositif selon la revendication 1, dans lequel l'embrayage (6) comprend une pièce d'embrayage (37) mobile par rapport au carter (2) entre une première position dans laquelle la pièce d'embrayage (37) est en prise avec la voie primaire (4) et une deuxième position dans laquelle la pièce d'embrayage (37) est en prise avec la voie secondaire (5).

3. Dispositif selon la revendication 2, dans lequel l'embrayage (6) comprend un électroaimant (38, 39) qui, lorsqu'il est alimenté, sollicite la pièce d'embrayage (37) vers la première position.

4. Dispositif selon l'une des revendications 2 et 3, dans lequel l'embrayage (6) comprend un organe élastique de rappel (40) propre à solliciter la pièce d'embrayage (37) vers la deuxième position.

5. Dispositif selon l'une des revendications 2 à 4, dans lequel la pièce d'embrayage (37) est mobile en translation par rapport au carter (2).

6. Dispositif selon la revendication 5, dans lequel l'arbre de sortie (3) est mobile en rotation par rapport au carter (2) selon un axe de rotation (X), et la pièce d'embrayage (37) est mobile en translation par rapport au carter (2) parallèlement à l'axe de rotation (X) de l'arbre de sortie (3).

7. Dispositif selon l'une des revendications 2 à 6, dans lequel la pièce d'embrayage (37) est montée solidaire en rotation de l'arbre de sortie (3) tout en étant mobile en translation par rapport à l'arbre de sortie (3).

8. Dispositif selon l'une des revendications 2 à 7, comprenant une membrane flexible (47) par l'intermédiaire de laquelle l'arbre de sortie (3) est raccordé à la pièce d'embrayage (37).

9. Dispositif selon l'une des revendications 1 à 8, dans lequel le premier organe de génération de couple (7, 8) comprend au moins un moteur électrique.

10. Dispositif selon la revendication 9, dans lequel la voie primaire (4) comprend un réducteur (9) par l'intermédiaire duquel le moteur électrique (7, 8) exerce le premier couple sur l'arbre de sortie (3).

11. Dispositif selon l'une des revendications 1 à 10, dans lequel le deuxième organe de génération de couple (29) est un système à frottement.

12. Dispositif selon la revendication 11, dans lequel le système à frottement (29) comprend un tambour (31) et un câble (32) en contact avec le tambour (31), le deuxième couple étant généré par frottement entre le câble (32) et le tambour (31) lorsque le tambour (31) est entrainé en rotation par rapport au câble (32).

13. Dispositif selon la revendication 12, dans lequel le câble (32) est fixé au carter (2) et le tambour (31) est monté rotatif par rapport au carter (2).

14. Dispositif selon l'une des revendications 12 ou 13, dans lequel le deuxième organe de génération de couple (29) comprend un élément élastique (36) reliant le câble (32) au carter (2).

15. Dispositif selon l'une des revendications 1 à 14, comprenant au moins un capteur de position (52-55) propre à mesurer une position angulaire de l'arbre de sortie (3) et une unité de commande électronique (57) propre à commander le premier organe de génération de couple (7, 8) en fonction de la position angulaire mesurée.

16. Dispositif selon l'une des revendications 1 à 15, dans lequel le manche de commande de vol (57) est un manche collectif d'hélicoptère.

## Patentansprüche

1. Flugzeug-Flugsteuerknüppel-Vorrichtung (1), aufweisend:
- ein Gehäuse (2), vorgesehen für einen Anbau an eine Struktur des Flugzeugs,
- eine Ausgangswelle (3), vorgesehen für Verbinden mit einem Flugsteuerknüppel (56), wobei die Ausgangswelle (3) im Verhältnis zum Gehäuse (2) drehbeweglich montiert ist,
- einen primären Pfad (4), aufweisend ein erstes Drehmoment erzeugendes Element (7, 8), mit der Fähigkeit zum Beaufschlagen der Ausgangswelle (3) mit einem ersten Drehmoment,
- einen sekundären Pfad (5), aufweisend ein zweites Drehmoment erzeugendes Element (29), mit der Fähigkeit zum Beaufschlagen der Ausgangswelle (3) mit einem ersten Drehmoment, und
- eine Kupplung (6), mit der Fähigkeit zum wahlweisen Verbinden des ersten Pfads (4) und des zweiten Pfads (5) mit der Ausgangswelle (3).

2. Vorrichtung nach Anspruch 1, wobei die Kupplung (6) einen Kupplungsteil (37) aufweist, der im Verhältnis zum Gehäuse (2) zwischen einer ersten Position, in der der Kupplungsteil (37) mit dem primären Pfad (4) im Eingriff ist, und einer zweiten Position, in der der Kupplungsteil (37) mit dem sekundären Pfad (5) im Eingriff ist, bewegbar ist.

3. Vorrichtung nach Anspruch 2, wobei die Kupplung (6) einen Elektromagneten (38, 39) aufweist, der bei Spannungsbeaufschlagung den Kupplungsteil (37) gegen die erste Position vorspannt.

4. Vorrichtung nach einem der Ansprüche 2 und 3, wobei die Kupplung (6) ein elastisches Rückführelement (40) mit der Fähigkeit zum Vorspannen des Kupplungsteils (37) gegen die zweite Position aufweist.

5. Vorrichtung nach einem der Ansprüche 2 bis 4, wobei der Kupplungsteil (37) im Verhältnis zum Gehäuse (2) translatorisch bewegbar ist.

6. Vorrichtung nach Anspruch 5, wobei die Ausgangswelle (3) im Verhältnis zum Gehäuse (2) entlang einer Drehachse (X) drehbeweglich und der Kupplungsteil (37) im Verhältnis zum Gehäuse (2) parallel zur Drehachse (X) der Ausgangswelle (3) translatorisch bewegbar ist.

7. Vorrichtung nach einem der Ansprüche 2 bis 6, wobei der Kupplungsteil (37) verdrehsicher an der Ausgangswelle (3) befestigt ist, während er im Verhältnis zur Ausgangswelle (3) translatorisch bewegbar ist.

8. Vorrichtung nach einem der Ansprüche 2 bis 7, aufweisend eine elastische Membran (47), mit deren Hilfe die Ausgangswelle (3) mit dem Kupplungsteil (37) verbunden ist.

9. Vorrichtung nach einem der Ansprüche 1 bis 8, wobei das erste Drehmoment erzeugende Element (7, 8) mindestens einen Elektromotor aufweist.

10. Vorrichtung nach Anspruch 9, wobei der primäre Pfad (4) ein Untersetzungsgetriebe (9) umfasst, durch das der Elektromotor (7, 8) die Ausgangswelle (3) mit dem ersten Drehmoment beaufschlagt.

11. Vorrichtung nach einem der Ansprüche 1 bis 10, wobei das zweite Drehmoment erzeugende Element (29) ein Reibungssystem ist.

12. Vorrichtung nach Anspruch 11, wobei das Reibungssystem (29) eine Trommel (31) und einen mit der Trommel (31) in Kontakt stehenden Seilzug (32) umfasst, wobei das zweite Drehmoment durch Reibung zwischen dem Seilzug (32) und der Trommel erzeugt wird, wenn die Trommel (31) im Verhältnis zum Seilzug (32) drehend angetrieben wird.

13. Vorrichtung nach Anspruch 12, wobei der Seilzug (32) am Gehäuse (2) befestigt und die Trommel (31) drehbeweglich am Gehäuse (2) befestigt ist.

14. Vorrichtung nach einem der Ansprüche 12 oder 13, wobei das zweite Drehmoment erzeugende Element (29) ein elastisches Element (36) aufweist, das den Seilzug (32) mit dem Gehäuse (2) verbindet,

15. Vorrichtung nach einem der Ansprüche 1 bis 14, aufweisend mindestens einen Positionssensor (52-55) mit der Fähigkeit zum Messen einer Winkelposition der Ausgangswelle (3) und eine elektronische Steuereinheit (57) mit der Fähigkeit zum Steuern des ersten Drehmoment erzeugenden Elements (7, 8) in Abhängigkeit von der gemessenen Winkelposition.

16. Vorrichtung nach einem der Ansprüche 1 bis 15, wobei der Flugsteuerknüppel (57) ein Steuerknüppel für kollektive Hubschrauber-Blattverstellung ist.

## Claims

1. An aircraft flight control stick device (1), comprising:
- a casing (2) intended to be attached to a structure of the aircraft,
- an output shaft (3) intended to be connected to a flight control stick (56), the output shaft (3) being mounted movable in rotation with respect to the casing (2),
- a primary path (4) comprising a first torque-generating member (7, 8) capable of exerting a first torque on the output shaft (3),
- a secondary path (5) comprising a second torque-generating member (29) capable of exerting a second torque on the output shaft (3), and
- a clutch (6) capable of selectively connecting the primary path (4) and the secondary path (5) to the output shaft (3).

2. The device according to claim 1, wherein the clutch (6) comprises a clutch part (37) movable with respect to the casing (2) between a first position in which the clutch part (37) is engaged with the primary path (4) and a second position in which the clutch part (37) is engaged with the secondary path (5).

3. The device according to claim 2, wherein the clutch (6) comprises an electromagnet (38, 39) which, when it is energized, biases the clutch part (37) toward the first position.

4. The device according to one of claims 2 and 3, wherein the clutch (6) comprises an elastic return member (40) capable of biasing the clutch part (37) toward the second position.

5. The device according to one of claims 2 to 4, wherein the clutch part (37) is movable in translation with respect to the casing (2) .

6. The device according to claim 5, wherein the output shaft (3) is movable in rotation with respect to the casing (2) along an axis of rotation (X), and the clutch part (37) is movable in translation with respect to the casing (2) parallel to the axis of rotation (X) of the output shaft (3).

7. The device according to one of clams 2 to 6, wherein the clutch part (37) is mounted secured in rotation to the output shaft (3) while being movable in translation with respect to the output shaft (3).

8. The device according to one of claims 2 to 7, comprising a flexible membrane (47) by means of which the output shaft (3) is connected to the clutch part (37).

9. The device according to one of claims 1 to 8, wherein the first torque-generating member (7, 8) comprises at least one electric motor.

10. The device according to claim 9, wherein the primary path (4) comprises a reduction gear (9) through which the electric motor (7, 8) exerts the first torque on the output shaft (3) .

11. The device according to one of claims 1 to 10, wherein the second torque-generating member (29) is a friction system.

12. The device according to claim 11, wherein the friction system (29) comprises a drum (31) and a cable (32) in contact with the drum (31), the second torque being generated by friction between the cable (32) and the drum (31) when the drum (31) is driven in rotation with respect to the cable (32).

13. The device according to claim 12, wherein the cable (32) is attached to the casing (2) and the drum (31) is rotationally mounted with respect to the casing (2).

14. The device according to one of claims 12 or 13, wherein the second torque-generating member (29) comprises an elastic element (36) connecting the cable (32) to the casing (2).

15. The device according to one of claims 1 to 14, comprising at least one position sensor (52-55) capable of measuring an angular position of the output shaft (3) and an electronic control unit (57) capable of controlling the first torque-generating member (7, 8) depending on the measured angular position.

16. The device according to one of claims 1 to 15, wherein the flight control stick (57) is a helicopter collective stick.
